# DEMANDE DE BREVET EUROPEEN

(11) **EP 0 559 549 A1**
(43) Date de publication de la demande: **08.09.1993**
(21) Numéro de dépôt: 93400529.9
(22) Date de dépôt: 02.03.1993
(51) Int. Cl.: G01J 1/42, G01S 3/781

(54) **Dispositif de détection optronique à amplification optique, et son application à la télémétrie et à l'écartométrie**

(30) Priorité: 03.03.1992 FR 9202497
(71) Demandeur: THOMSON-CSF, 75008 Paris (FR)
(72) Inventeur: Rousseau, Pascal, F-92402 Courbevoie Cedex (FR); Defour, Martin, F-92402 Courbevoie Cedex (FR); Ayral, Jean-Luc, F-92402 Courbevoie Cedex (FR)
(74) Mandataire: Lincot, Georges

(57) **Abrégé**

L'invention concerne un dispositif de détection optronique comprenant outre un objectif (A) captant une onde à détecter et des moyens de conversion opto-électronique (E), un guide d'onde à fibres optiques (foᵢⱼ) siège d'effets optiques non-linéaires.

Dans une variante de réalisation préférée, chaque fibre optique est dopée par un ou plusieurs ions de terre rare, tel l'Erbium :Er³⁺, excités par pompage optique (D).

Application à la télémétrie, à l'écartométrie et plus généralement à la veille optique durcie contre les agressions optiques (contre-mesure).

## Description

L'invention se rapporte au domaine des dispositifs de détection optronique et plus particulièrement aux dispositifs nécessitant une grande sensibilité.

L'invention s'intéresse à des domaines variés tels que la télémétrie, l'écartométrie et la veille optique pour lesquels les performances sont d'autant améliorées que le dispositif de détection est sensible.

En effet, l'une des caractéristiques principales d'un système optronique réside dans la détermination de la distance maximale jusqu'à laquelle le système peut assurer sa fonction. On cherche naturellement à obtenir des portées les plus longues possibles.

Pour ce faire, on peut utiliser des détecteurs ayant une grande sensibilité, par exemple fonctionnant selon le principe de l'amplification par avalanche contrôlée. Toutefois, ce principe d'amplification par voie électrique nécessite une polarisation importante : quelques centaines de volts. Cette caractéristique rend particulièrement difficile la réalisation de mosaïques de détecteurs fonctionnant selon ce procédé et dont le gain serait uniformément réparti.

En outre, une des caractéristiques de l'avalanche électrique est que le gain est peu dépendant du flux optique illuminant le détecteur. Cette caractéristique supplémentaire rend le dispositif particulièrement sensible à une agression optique brutale. On vise ici les applications militaires et plus particulièrement ce qui est connu sous le terme "contre-mesure". Il convient, en effet pour ces applications, de "durcir" le dispositif de détection pour parer aux contre-mesures.

Pour les raisons qui viennent d'être rappelées, les systèmes du type veille, télémétrie optique d'écartométrie, etc... n'utilisent pas de détection avec amplification électrique.

Dans l'art connu, l'augmentation de la sensibilité peut être obtenue selon deux voies principales.

La première est la voie électrique qui vient d'être rappelée. Elle consiste à appliquer une forte tension inverse aux bornes d'une photodiode : quelques centaines de volts. Celle-ci procure aux électrons photocréés par illumination une accélération telle qu'ils se multiplient par collisions. Le gain peut atteindre une valeur de l'ordre de cent. Les détecteurs fonctionnant ainsi sont dits à avalanche.

La seconde voie est la voie optique : il s'agit de l'amplification du flux optique. Divers procédés peuvent être mis en oeuvre. On peut exploiter les non-linéarités optiques telles que l'effet Raman stimulé. Une autre alternative repose sur l'utilisation des transitions radiatives des terres rares. Ces ions peuvent être insérés dans des matrices variées : semiconducteurs, cristaux, matériaux amorphes, liquides etc... Tout particulièrement, on peut utiliser des fibres optiques faiblement dopées avec des ions de terre rare, par exemple de l'Erbium.

Selon ce procédé, on pompe optiquement un ion de terre rare dopant le matériau de la fibre optique. Lorsque la fibre optique est illuminée, les ions dus à cette illumination, dont la longueur d'onde se trouve sur la courbe de gain, se multiplient par émission stimulée. Un gain de l'ordre de 1000 peut être atteint.

Pour tous ces procédés d'amplification par voie optique, le gain est sélectif en longueur d'onde. Il dépend par exemple de la nature de l'ion et de la largeur de la courbe de gain d'amplification.

L'invention vise à pallier les inconvénients de l'art connu qui viennent d'être rappelés.

L'invention permet tout à la fois une bonne résolution, une haute sensibilité et une protection efficace aux agressions optiques.

L'invention a donc pour objet un dispositif de détection optronique d'une onde optique d'une première longueur d'onde déterminée comprenant des moyens destinés à capter cette onde et des moyens de conversion opto-électronique de l'onde captée ; caractérisé en ce qu'il comprend un guide d'onde comprenant au moins une fibre optique disposé entre les moyens destinés à capter l'onde et les moyens de conversion opto-électroniques ; et en ce que chaque fibre optique est soumise à un effet optique non-linéaire.

L'invention a encore pour objet un système de télémétrie et un système d'écartométrie mettant en oeuvre un tel dispositif.

L'invention sera mieux comprise et d'autres caractéri stiques et avantages apparaîtront à la lecture de la description qui suit au regard des figures annexées et parmi lesquelles :
- la figure 1 illustre un dispositif selon l'invention,
- la figure 2 est un diagramme représentant les niveaux d'énergie de l'ion Er³⁺ et la position des bandes d'absorption et d'émission,
- la figure 3 illustre un système de télémétrie incorporant les dispositions prévues par l'invention,
- la figure 4 illustre un système d'écartométrie incorporant les dispositions prévues par l'invention.

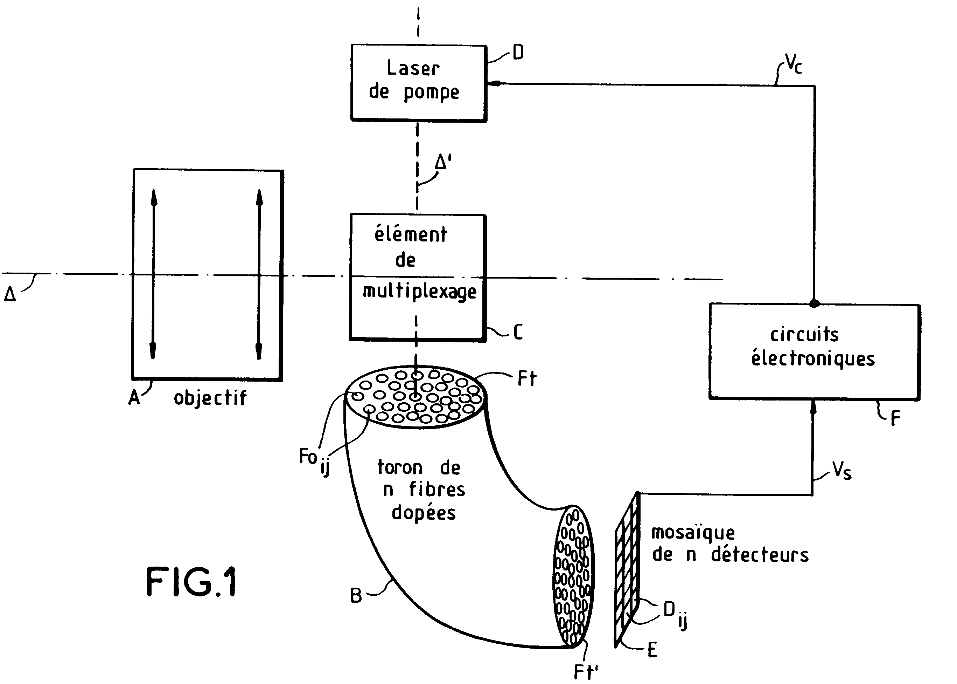

Un exemple de réalisation d'un dispositif selon l'invention va maintenant être décrit par référence à la figure 1.

Le dispositif illustré par cette figure comprend un objectif de visée A, suivant un axe de visée Δ un guide d'onde optique B constitué par un assemblage de n fibres optiques foᵢⱼ a une de ses faces terminales ft, ou face d'entrée, placée au foyer de l'objectif A. Cette face terminale ft de l'assemblage est polie. Les fibres foᵢⱼ sont de préférence collées pour former un toron.

Selon une caractéristique importante de l'invention, les fibres optiques foᵢⱼ sont dopées par un ion de terre rare, par exemple de l'Erbium : Er³⁺. Le taux de dopage est de l'ordre de quelques pour cent. Chaque fibre va donc agir en tant qu'amplificateur. Pour ce faire, une onde de pompage produite par un laser D va être utilisée. La puissance de pompage nécessaire est de l'ordre de la centaine de mW. L'objectif A est destiné à recevoir une onde lumineuse à détecter, par exemple de longueur d'onde λ = 1,54 µm. Il est donc nécessaire de multiplexer cette onde et l'onde de pompage dans le toron B de fibres optiques foᵢⱼ. Un élément de multiplexage C est utilisé à cet effet. Ce peut être un filtre interférentiel, un cube séparateur de polarisation, un miroir dichroïque ou tout élément optique pouvant réaliser cette fonction.

L'élément de multiplexage C est donc inséré entre, d'une part, l'ensemble constitué par l'objectif A et le laser de pompe D et, d'autre part, la face terminale ft du toron B. De façon plus précise dans une variante de construction, illustrée par la figure 1, l'axe de symétrie de l'objectif A étant l'axe Δ, le laser de pompe D émettra suivant une direction moyenne parallèle à un axe Δ' perpendiculaire à l'axe Δ et à la face terminale ft du toron B. Il ne s'agit là naturellement que d'une variante constructionnelle parmi d'autres possibles. L'agencement des différents éléments dépend en outre des choix technologiques effectués. Il convient notamment si l'élément de multiplexage C est un cube séparateur de polarisation.

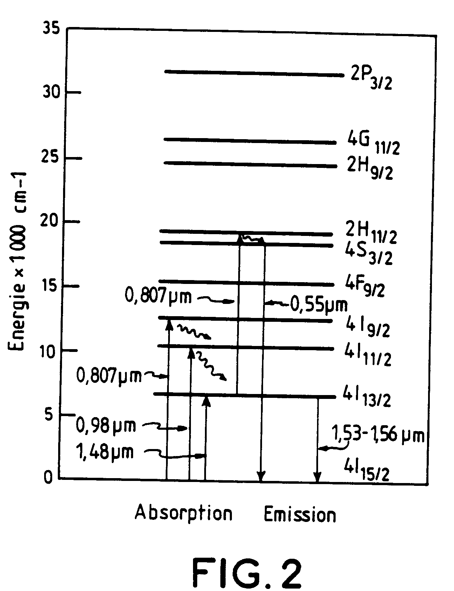

Avant de décrire plus avant le dispositif de l'invention, les principales caractéristiques de l'amplification optiques à l'aide d'une fibre optique dopée vont être rappelées brièvement par référence à la figure 2. On prendra l'exemple, non limitatif, de l'ion Erbium : Er³⁺.

Les niveaux d'énergies, l'identification des transitions radiatives et les mécanismes de pompage de l'Erbium sont présentés sur la figure 2.

Pour obtenir une émission à 1,54µm (transition ⁴|_{13/2}→⁴|_{15/2}), on peut utiliser un pompage à 0,808 µm, à 0,98µm ou encore à 1,48µm. Bien que le pompage à 0,98µm soit le plus performant, l'existence de sources à 0,8µm et 1,48µm, développées dans le cadre de filières déjà bien éprouvées industriellement, peut être mise à profit.

En fonction du niveau de puissance de l'onde de pompe, on observe une amplification de l'onde signal, c'est-à-dire l'onde reçue par l'objectif A, plus ou moins importante. Cette amplification intègre des mécanismes de saturation du gain et dépend également du niveau du signal injecté.

Selon une autre caractéristique importante de l'invention, il est tiré parti de cette dernière caractéristique de non-linéarité pour durcir le dispositif contre les agressions optiques.

En se reportant de nouveau à la figure 1, on constate que l'autre face terminale ft' du toron B ou face de sortie, également polie, est positionnée au regard d'une mosaïque E de n photodétecteurs Dᵢⱼ. Le nombre n de photodétecteurs est normalement égal au nombre de fibres optiques foᵢⱼ composant le toron B. De façon plus précise, la configuration de la mosaïque E de photodiodes est telle qu'il y ait concordance entre la topologie de la face terminale ft' du toron B et celle de la mosaïque. Il est à noter qu'il y a indépendance entre les topologies respectives des faces terminales ft et ft' ; étant entendu qu'une répartition régulière des fibres optiques tout le long du toron B est plus aisée à obtenir.

Pour fixer les idées, sans que cela soit limitatif, on supposera dans ce qui suit que la mosaïque est une matrice de i lignes et j colonnes, avec n = i x j, nombre total de photodétecteurs.

Selon une autre caractéristique de l'invention, on obtient par ce biais une bonne résolution, résolution directement proportionnelle au nombre n de photodiodes, tout en permettant une intégration aisée. En effet, il s'agit de photodiodes ou de façon plus générale, de photodétecteurs ne nécessitant pas de tension d'alimentation élevée comme dans le cas de photodiodes à avalanche. En outre, il n'y a pas de dispersion de gain d'un photodétecteur à l'autre, puisque le gain est égal à l'unité ; ces détecteurs n'étant utilisés que pour assurer la conversion opto-électronique. On considère la longueur d'onde du signal λ à 1,54µm, on peut utiliser des détecteurs du type germanium (Ge) ou Gallium-Indium-Arsenic (GaInAs). Pour d'autres longueurs d'onde, on choisira le type de détecteur adapté.

Les signaux de sortie V_{S} de ce détecteurs sont transmis à des circuits électroniques F de traitement et d'exploitation de signaux. Ce traitement, en soi, ne diffère pas du traitement effectué dans l'Art Connu et il est inutile de le détailler.

Dans une autre variante de réalisation, non représentée, l'élément de multiplexage est disposé en aval du toron B, c'est-à-dire entre la face ft' et la mosaïque E de détecteurs Dᵢⱼ.

En outre, comme il a été indiqué, la résolution est liée au nombre n de détecteurs Dᵢⱼ. Celui-ci peut donc être plus ou moins important. A la limite, pour certaines applications, il peut être réduit à l'unité.

Enfin, les circuits électroniques F assurent également la commande automatique du gain de l'amplification. Pour ce faire, un signal de commande V_{C} est généré par les circuits électroniques F pour ajuster l'intensité de pompe. Ce signal V_{C} est fonction de certaines caractéristiques des signaux détectés V_{S}. Pour ce faire, on peut détecter le niveau de bruit dans V_{S} ou mesurer la fluorescence.

Comme il a été précédemment indiqué, le dispositif selon l'invention permet donc, à la fois, une très bonne résolution, une haute sensibilité, une protection efficace contre les agressions optiques et une commande automatique du gain d'amplification en ajustant l'intensité de pompe.

La sensibilité peut atteindre quelques dizaines de nanowatts.

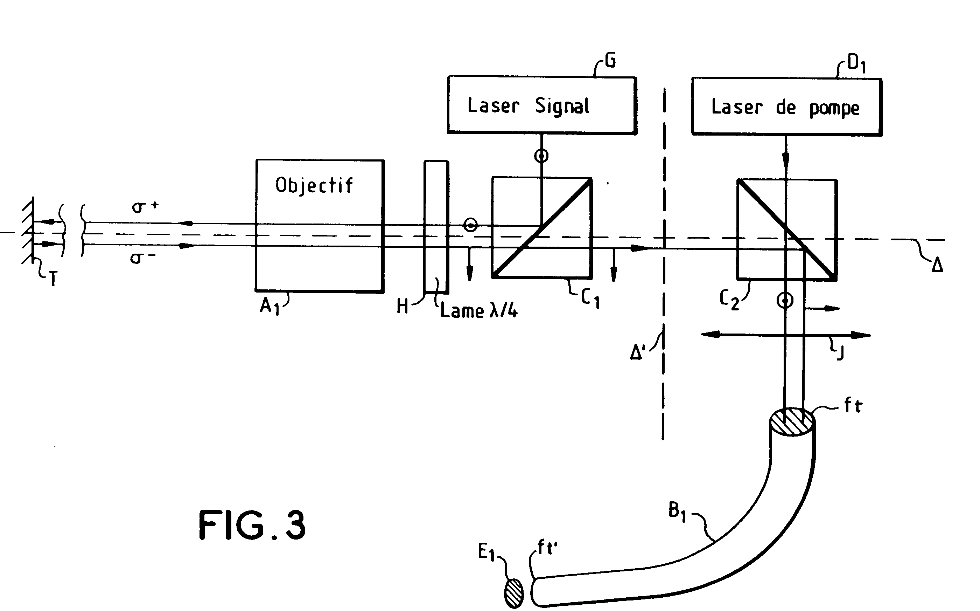

Un premier exemple d'application du dispositif de l'invention est représenté sur la figure 3.

Cette figure illustre un système de télémétrie Ce système incorpore les enseignements de l'invention.

La différence notable avec le dispositif décrit en regard de la figure 1 est la présence d'un laser supplémentaire G appelé "laser signal".

En effet, le système doit générer son propre signal lumineux, signal qui va être émis suivant une direction de propagation parallèle à l'axe Δ. Après réflexion sur une cible T, celui -ci va être détecté de manière analogue à ce qui a été décrit pour le dispositif de la figure 1.

Le laser G peut être constitué par un laser Erbium émettant sur une longueur d'onde λ = 1,54µm. On peut également utiliser un laser YAG qui lui-même vient pomper une cellule dans laquelle se trouve un gaz. Cette cellule présente un décalage en longueur d'onde Raman autorisant le transfert de l'onde de pompe située à 1,064µm vers 1,54µm. Un tel gaz peut être du méthane (CH₄) sous haute pression. Ce gaz présente un décalage spectral Raman de 2 916cm⁻¹ et un coefficient de gain Raman de l'ordre de 1,4cm/GW sous une pression de 10 atmosphères. A titre d'exemple, on peut trouver la description de telles sources utilisant l'effet Raman dans l'article de J.J. OTTUSCH et al, publié dans "IEEE Journal of Quantum Electronics", volume 24, n° 10, octobre 1988, intitulé : "Measurement of Raman Gain Coefficients of Hydrogen, Deuterium and Methane" ou dans la demande de brevet français n° 89 09303, déposée le 11 juillet 1989 au nom de THOMSON-CSF. On peut aussi utiliser un laser Nd:YAG associé à un oscillateur paramétrique optique (O.P.O.).

Le laser G émet, sur une longueur d'onde 1,54µm, une lumière polarisée, par exemple vertical comme illustré sur la figure 3. Par convention, on suppose que les éléments représentés sur cette figure sont vus de haut. L'onde émise se propage suivant une direction parallèle à un axe Δ', perpendiculaire à l'axe Δ dans l'exemple illustré. Cette onde est réfléchie par un premier cube séparateur de polarisation C₁ et traverse une lame quart d'onde H. Cette dernière transforme la polarisation linéaire en polarisation circulaire, par exemple en polarisation circulaire droit. L'onde, notée σ+ traverse l'objectif A₁. Après réflexion sur une cible T, le flux retrodiffusé a une polarisation inversée notée σ-. Ce flux est capté par l'objectif A₁, retraverse la lame quart d'onde H et redevient polarisé linéaire ; plus précisément polarisé horizontal dans l'exemple illustré. Dans le cas général, il est polarisé perpendiculairement à la polarisation d'émission. De ce fait, il traverse le cube séparateur de polarisation C₁ sans être réfléchi et atteint un élément C₂ multiplexeur. Cet élément jour le rôle de l'élément multiplexeur C de la figure 1. Dans l'exemple illustré, il est constitué par un second cube séparateur de polarisation C₂, réfléchissant l'onde reçue vers la face terminal ft du guide d'onde B₁ à fibres optiques, via une lentille de focalisation J. Comme précédemment, les fibres optiques constituant ce guide d'onde B₁ sont dopées, par exemple avec des ions Erbium : Er³⁺.

L'élément de multiplexage C₂ transmet, sans le réfléchir, le faisceau émis par un laser de pompe D₁ permettant l'amplification du flux optique retrodiffusé et capté par le système de la figure 3.

La face terminale ft, opposée à la face terminale ft, est couplée à des éléments détecteurs référencés E₁.

L'électronique qui permet l'alimentation et la commande des lasers G et D₁, ainsi que l'exploitation des signaux détectés, n'a pas été représentée. Il s'agit de circuits et d'éléments bien connus de l'Homme de Métier qu'il est inutile de détailler plus avant.

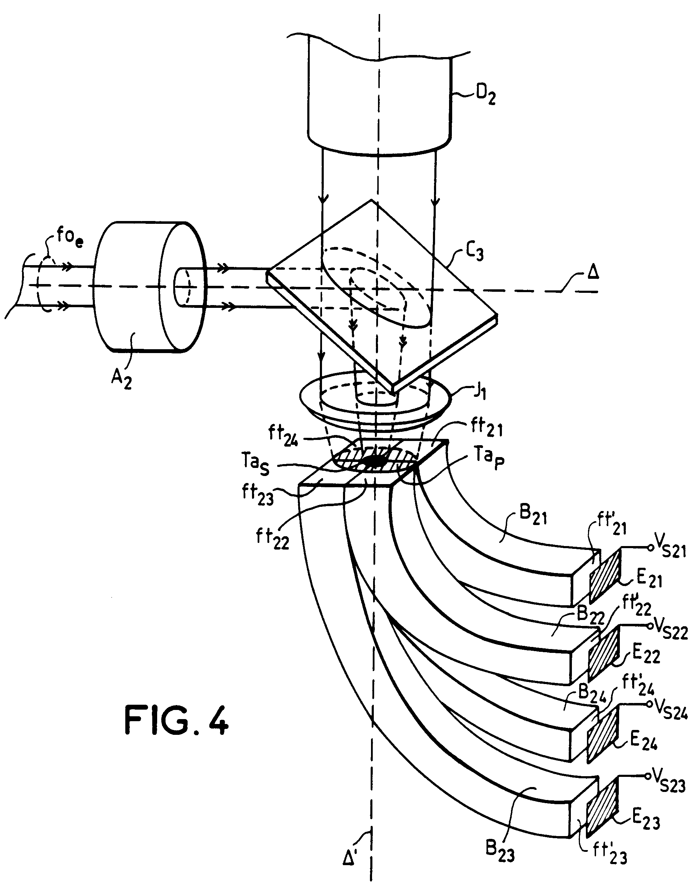

Un autre exemple d'application d'un dispositif selon l'invention est représenté sur la figure 4.

Cette figure illustre un système d'écartométrie incorporant les enseignements de l'invention.

Le système comprend un objectif A₂ qui transmet le flux entrant foₑ ou flux signal vers un élément optique multiplexeur C₃. Il peut s'agir, par exemple, d'un filtre interférentiel, transmettant sans la réfléchir la longueur d'onde de pompe générée par le laser D₂. Cette longueur d'onde, comme on l'a vu au regard du diagramme de la figure 2, est, dans une variante préférée, choisie égale à 0,98µm. Le filtre C₃ est par contre réfléchissant pour la longueur d'onde signal à mesurer. Sans que cela soit limitatif, pour fixer les idées, on supposera dans ce qui suit que la longueur d'onde du signal à mesurer est égale à 1,54µm. Les deux ondes, onde signal et onde de pompe, sont focalisés à l'aide d'une lentille J₁ sur les faces terminales de quatre guides d'onde B₂₁ à B₂₄ à fibres optiques dopées. Les faces terminales, ft₂₁ à ft₂₄, polies et planes, sont réparties de façon régulière autour d'un axe Δ', axe d'émission du laser de pompe. Les faces terminales ft₂₁ à ft₂₄, forment donc un capteur de flux lumineux à quatre quadrants. Le flux de l'onde de pompe forme une tache Taₚ équi-répartie en énergie sur ces quatre faces terminales. Il n'en est pas de même de la tache signal Ta_{S}. En effet, selon l'angle d'inclinaison du faisceau entrant par rapport à l'axe de symétrie Δ de l'objectif A₂, la tache signal Taₛ va se déplacer sur le plan que forment les quatre faces terminales ft₂₁ à ft₂₄. La répartition du flux signal dans les quatre guide d'ondes B₂₁ à B₂₄ n'est donc plus homogène.

Le poids relatif de couplage fournit une mesure d'écartométrie. Pour rendre cette mesure effective, les faces terminales ft'₂₁ à ft'₂₄ ou faces de sortie sont couplées, chacune, à des éléments photodétecteurs, notés E₂₁ à E₂₄. Ces éléments photodétecteurs convertissent l'énergie optique captée (après amplification dans les fibres dopées) en signaux électriques de sortie V_{S21} à V_{S24}. Les amplitudes relatives de ces signaux permettent la mesure desdits poids relatifs.

Il est en effet aisé de constater que, si d'une part la tache signal Taₛ est parfaitement centrée par rapport à l'axe Δ', axe d'émission de l'onde de pompe, et que, si d'autre part, le flux de pompe est équi-réparti entre les quatre guides d'onde, ce qui est le cas par hypothèse, alors les signaux V_{S21} à V_{S24} sont tous égaux. Ceci se réalise lorsque le flux entrant foₑ est centré par rapport à l'axe Δ.

Dans tous les autres cas, la tache signal Taₛ est décentrée par rapport à l'axe Δ' et donc les flux dans les différents guides d'onde sont déséquilibrés. Il s'ensuit que les amplitudes des signaux V_{S21} a V_{S24} sont, en tout ou partie, différentes, selon la position de la tache Taₛ par rapport à l'axe Δ'.

L'écartomètre illustré sur la figure 3 permet d'effectuer des mesures d'écartométrie en deux dimensions puisqu'il est muni de quatre quadrants. Une réalisation simplifiée, non illustrée, ne comportant que deux faisceaux de fibres optiques permettrait des mesures uniaxiales : deux quadrants.

Dans l'exemple de réalisation illustré sur la figure 4, sauf à utiliser des moyens de compensation, il est nécessaire que les axes Δ et Δ' soient perpendiculaire entre eux et que l'axe Δ' soit en outre perpendiculaire à la surface formée par les quatre faces terminales ft₂₁ à ft₂₄. Le miroir dichroïque C₃ doit être incliné à 45° par rapport aux axes Δ et Δ'.

L'invention n'est pas limitée aux seuls dispositifs et systèmes précisément décrits.

En premier lieu, on peut doper les fibres optiques avec plusieurs ions de terre rare différents. A titre d'exemple on peut utiliser l'ion Neodyme : Nd³⁺, en supplément de l'ion Erbium Er³⁺. On réalise ainsi une amplification, toujours sélective, mais, sur plusieurs longueurs d'ondes. En mettant en oeuvre plusieurs lasers de pompe, on sélectionne la longueur d'onde désirée en activant le laser de pompe correspondant à l'ion sélectionné. On peut également utiliser un laser accordable. Un tel laser est l'objet de la demande de brevet français n° 89 09393 précitée. A titre d'exemple, si l'on utilise l'ion Neodyme, la longueur d'onde de pompe est λ = 0,8µm, la longueur d'onde signal est λ = 1,06µm et on peut mettre en oeuvre des détecteurs au silicium : Si, ou de nouveau des détecteurs Gallium-Indium Arsenic GaInAs.

En lieu et place de fibres optiques dopées, selon la variante préférée de l'invention qui vient d'être décrite, on peut également mettre en oeuvre l'amplification optique par effet Raman stimulé dans des fibres optiques. Il s'agit alors de fibres non dopées soumises à une puissance crête de pompe très forte, typiquement de l'ordre de 1kw. Dans ces conditions, le matériau devient non-linéaire.

Enfin, dans une variante supplémentaire, pour augmenter considérablement le durcissement, c'est-à-dire la résistance à l'éblouissement, on peut rendre le matériau absorbant. Pour ce faire, on règle l'intensité du laser de pompe pour que l'on se situe en dessous de l'inversion de population du milieu amplificateur. Physiquement, le phénomène consiste en une absorption suivie d'une réémission spontanée dans toutes les direction. Cela entraîne un gain inférieur à l'unité.

## Revendications

1. Dispositif de détection optronique d'une onde optique d'une première longueur d'onde déterminée comprenant des moyens (A) destinés à capter cette onde et des moyens de conversion opto-électronique (E) de l'onde captée ; caractérisé en ce qu'il comprend un guide d'onde (B) comprenant au moins une fibre optique (foᵢⱼ) disposé entre les moyens (A) destinés à capter l'onde et les moyens de conversion opto-électroniques (E) ; et en ce que chaque fibre optique est soumise à un effet optique non-linéaire.

2. Dispositif selon la revendication 1 ; caractérisé en ce que chaque fibre (foᵢⱼ) est dopée avec au moins un ion de terre rare et en ce qu il comprend en outre une source (D) émettant une onde de pompe d'une seconde longueur d'onde déterminée et des moyens de multiplexage (C) transmettant audit guide d'onde (B) l'onde de pompe et l'onde optique d'une première longueur d'onde déterminée.

3. Dispositif selon la revendication 2 ; caractérisé en ce que l'ion de dopage est de l'Erbium : Er³⁺, la longueur d'onde de pompe λ = 0,98µm, les moyens de conversion opto-électronique choisis parmi les suivants : photodiode Germanium ou photodiode gallium-Indium-Arsenic.

4. Dispositif selon la revendication 2, caractérisé en ce que l'ion de dopage est du Neodyme : Nd³⁺, la longueur d'onde de pompe λ = 0,8µm et les moyens de conversion opto-électronique choisis parmi les suivants : photodiode au silicium ou photodiode Gallium-Indium-Arsenic.

5. Dispositif selon la revendication 2 ; caractérisé en ce que chaque fibre (foᵢⱼ) est dopée avec plusieurs ions différents de terre rare de manière à obtenir un effet non linéaire sélectif sur une gamme de plusieurs longueurs d'onde distinctes ; et en ce que ladite source de pompe (D) est susceptible d'émettre sur ces dites longueurs d'onde.

6. Dispositif selon la revendication 5 ; caractérisé en ce que ladite source de pompe (D) comprend plusieurs lasers de pompe émettant chacun sur une des longueurs d'onde de ladite gamme.

7. Dispositif selon la revendication 5 ; caractérisé en ce que ladite source de pompe (D) comprend un laser accordable sur les longueurs d'onde de ladite gamme.

8. Dispositif selon l'une quelconque des revendications 2 à 7 ; caractérisé en ce que la puissance de pompe est suffisante pour obtenir une inversion de la population électronique de chaque fibre optique (foᵢⱼ) de manière à obtenir une amplification de l'onde de ladite première longueur d'onde prédéterminée.

9. Dispositif selon l'une quelconque des revendications 2 à 7 ; caractérisé en ce que la puissance de pompe est inférieure à celle nécessaire pour obtenir une inversion de la population électronique de chaque fibre optique (foᵢⱼ) de manière à rendre le milieu absorbant et à obtenir un gain optique inférieur à l'unité.

10. Dispositif selon la revendication 1 ; caractérisé en ce que l'effet optique non-linéaire dans chacune des fibres optiques est un effet Raman stimulé ; et en ce qu'il comprend en outre une source (D) émettant une onde de pompe d'une seconde longueur d'onde induisant ledit effet Raman et des moyens de multiplexage (C) transmettant audit guide d'onde (B) l'onde de pompe et l'onde optique d'une première longueur d'onde déterminée.

11. Dispositif selon l'une quelconque des revendications 1 à 10 ; caractérisé en ce que ledit guide d'onde (B) est constitué par un faisceau de fibres optiques (foᵢⱼ) et en ce que les moyens de conversion optoélectroniques (E) sont constitués par une mosaïque de photodiodes (Dᵢⱼ), chaque photodiode étant couplée optiquement à l'une des extrémités (ft') desdites fibres optiques.

12. Système de télémétrie comprenant des moyens (G) pour émettre une onde de ladite première longueur d'onde suivant une direction déterminée (Δ) ; caractérisé en ce qu'il comprend en outre un dispositif de détection optronique de ladite onde après retrodiffusion sur une cible (T) selon l'une quelconque des revendications 1 à 11.

13. Système d'écartométrie ; caractérisé en ce qu'il comprend un dispositif de détection optronique d'une onde optique d'une première longueur d'onde déterminée selon l'une quelconque des revendications 1 à 11 et des moyens de focalisation de ladite onde optique captée sur une face d'entrée dudit guide d'onde (B) ; en ce que ce guide d'onde est constitué de plusieurs faisceaux de fibres optiques (B₂₁ à B₂₄) de manière à diviser la face d'entrée en secteur (ft₂₁ à ft₂₄) recevant chacun une portion de l'onde optique focalisée et transmettant ces portions aux faisceaux de fibres optiques ; et en ce que les faces de sorties (ft'₂₁ à ft'₂₄) des faisceaux sont couplées chacune à un convertisseur opto-électronique (E₂₁ à E₂₄), fournissant des signaux (V_{S21} à V_{S24}) représentatifs d'une mesure d'écartométrie.

14. Dispositif selon la revendication 13 ; carac. térisé en ce que ledit guide d'onde (B) est divisé en quatre faisceaux de fibres optiques (B₂₁ à B₂₄).
